# EUROPEAN PATENT SPECIFICATION

(11) **EP 3 460 428 B1**
(45) Date of publication and mention of the grant of the patent: **03.06.2026**
(21) Application number: 17382620.7
(22) Date of filing: 20.09.2017
(51) Int. Cl.: G01J 5/00, G01J 3/32, G01J 3/427, G01J 1/04, G08B 17/107

(54) **DUAL WAVELENGTH DETECTOR**
DETEKTOR VON DUALEN WELLENLÄNGEN
DÉTECTEUR DE LONGUEUR D'ONDE DOUBLE

(43) Date of publication of application: 27.03.2019
(73) Proprietor: Carrier Corporation, Jupiter, FL 33478 (US)
(72) Inventor: ESCOFET VIA, Jordi, 08950 Barcelona (ES); VIDAL PUENTE, Javier, 08950 Barcelona (ES)
(74) Representative: Balder IP Law, S.L.

(56) References cited:
- EP-A1- 2 350 616
- WO-A1-2010/038024
- GB-A- 2 499 256
- JP-B1- 6 083 660
- US-A1- 2015 371 515

## Description

### BACKGROUND

The subject matter disclosed herein relates to detection systems, and more specifically, to a method for evaluating a condition of a detection device of the detection system using scattered light principles.

Life safety devices, such as commercial and/or industrial smoke detectors, often located inside of a housing or enclosure, use light scattering to detect the presence of a hazardous condition in the area being monitored. However, most conventional life safety devices are not capable of distinguishing between hazardous conditions and other nuisance conditions that typically occur, such as the presence of dust or steam adjacent the detector. False alarms are more likely to occur as a result of these other particles.

US 2015/371515 A1 discloses a detection apparatus for monitoring a condition of an area comprising a control system , a light source operable to selectively emit a first light having a first wavelength and a second light source operable to emit a second light having a second wavelength, wherein the first wavelength and the second wavelength are different; and a light sensing device operable to measure a scattered portion of the first light and measure a scattered portion of the second light to determine a type of particle present within the area, the detection apparatus being a chamber-less smoke detector

### Brief Description

The present invention relates to a detection apparatus as defined in claim 1.

In addition to one or more of the features described above, or as an alternative, in further embodiments at least one of the first wavelength and the second wavelength is within a visible spectrum.

In addition to one or more of the features described above, or as an alternative, in further embodiments at least one of the first wavelength and the second wavelength is associated with infrared radiation.

In addition to one or more of the features described above, or as an alternative, in further embodiments at least one of the first wavelength and the second wavelength is associated with ultraviolet radiation.

In addition to one or more of the features described above, or as an alternative, in further embodiments the light source is a light emitting diode.

In addition to one or more of the features described above, or as an alternative, in further embodiments the light sensing device is a photodiode.

In addition to one or more of the features described above, or as an alternative, in further embodiments a processing device operably coupled to the at least one light source and the at least one light sensing device, wherein the processing device is configured to control emission of the first light and the second light.

In addition to one or more of the features described above, or as an alternative, in further embodiments the processing device is configured to compare the scattered portion of the first light and the refracted portion of the second light to known values to determine the type of particle present within the area.

In addition to one or more of the features described above, or as an alternative, in further embodiments the processing device is configured to determine whether the type of particle present within the area is one of a nuisance particle and a hazardous particle.

In addition to one or more of the features described above, or as an alternative, in further embodiments measuring the scattered portion of the first light is performed by a light sensing device and measuring the scattered portion of the second light is performed by the same light sensing device.

In addition to one or more of the features described above, or as an alternative, in further embodiments emitting the first light is performed by a light source and emitting the second light is performed by the same light source.

In addition to one or more of the features described above, or as an alternative, in further embodiments at least one of the first wavelength and the second wavelength is within a visible spectrum.

In addition to one or more of the features described above, or as an alternative, in further embodiments determining if the type of particle present in the area is one of a nuisance particle and a hazardous particle.

In addition to one or more of the features described above, or as an alternative, in further embodiments generating an alarm in response to determining that the type of particle present in the area is a hazardous particle.

These and other advantages and features will become more apparent from the following description taken in conjunction with the drawings.

### BRIEF DESCRIPTION OF THE DRAWINGS

The subject matter, which is regarded as the disclosure, is particularly pointed out and distinctly claimed in the claims at the conclusion of the specification. The foregoing and other features, and advantages of the disclosure are apparent from the following detailed description taken in conjunction with the accompanying drawings in which:
FIG. 1 is a top view of a detection apparatus according to an embodiment;
FIG. 2 is a cross-sectional view of a detection apparatus according to an embodiment;
FIG. 3 is a schematic diagram of a control system according to an embodiment; and

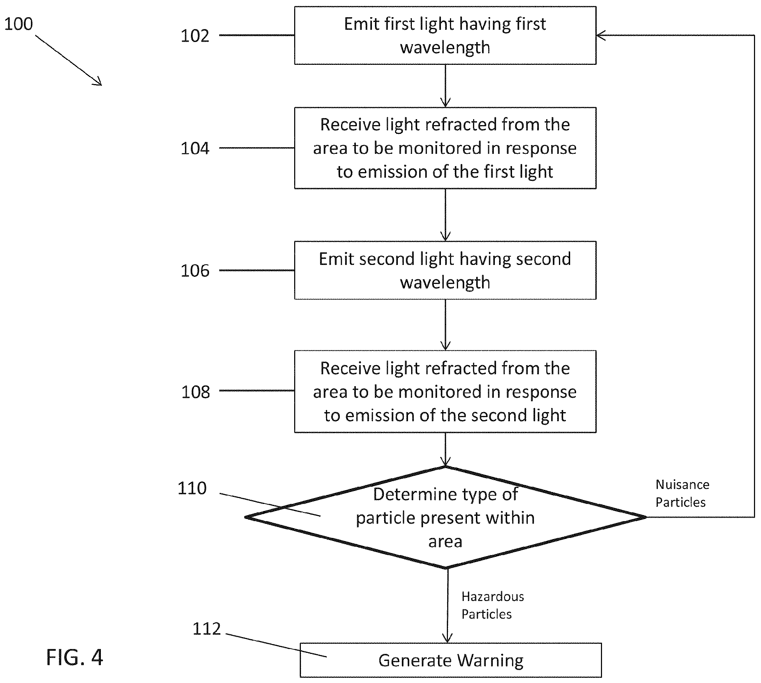

FIG. 4 is a method of determining a condition of the cover of the detection apparatus according to an embodiment.

The detailed description explains embodiments of the disclosure, together with advantages and features, by way of example with reference to the drawings.

### DETAILED DESCRIPTION

Referring now to the FIGS., a detection apparatus 20 for detecting one or more conditions or events within a designated area is illustrated. According to the claimed subject-matter, the detection apparatus 20 is a chamber-less smoke detector. It will be appreciated that a chamber-less smoke detector may provide additional benefits including, but not limited to reduction of transport time for smoke to reach the sensor elements to enable faster response/alarm times, improved sensitivity, manufacturability, and reproducibility, negligible directionality, each of maintenance, and enhanced aesthetics for example. In addition, the detection apparatus 20 may be able to detect one or more hazardous conditions, including but not limited to the presence of smoke, fire, temperature, flame, or any of a plurality of pollutants, combustion products, or chemicals. Alternatively, or in addition, the detection apparatus 20 may be configured to perform monitoring operations of people, lighting conditions, or objects. In an embodiment, the detection apparatus 20 may operate in a manner similar to a motion sensor, such as to detect the presence of a person, occupants, or unauthorized access to the designated area for example. The conditions and events described herein are intended as an example only, and other suitable conditions or events are within the scope of the disclosure.

The detection apparatus 20 uses light to evaluate a volume for the presence of a condition. In this example, light is emitted into the designated area; when the light encounters a particle, such as smoke, dust, or steam particles for example, the light is scattered and/or absorbed due to a difference in the refractive index of the object compared to the surrounding medium (air). Observing any changes in the incident light can provide information about the designated area including determining the presence of a predetermined condition or event.

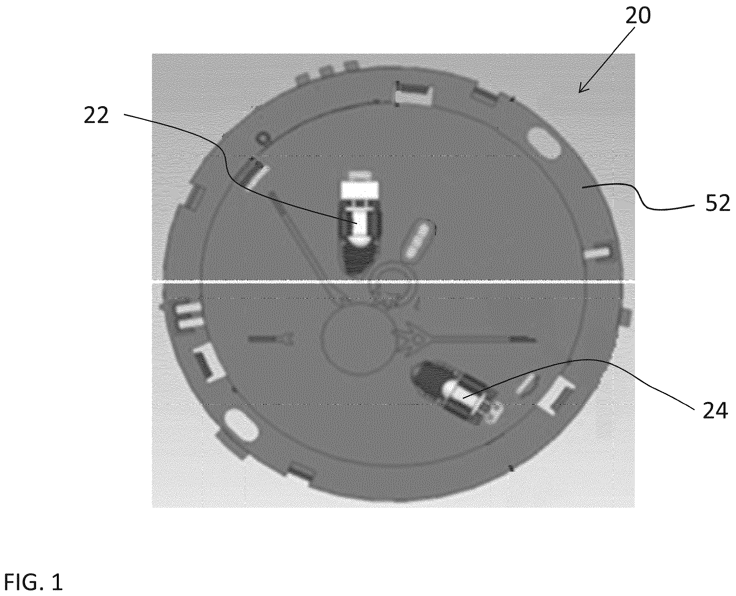

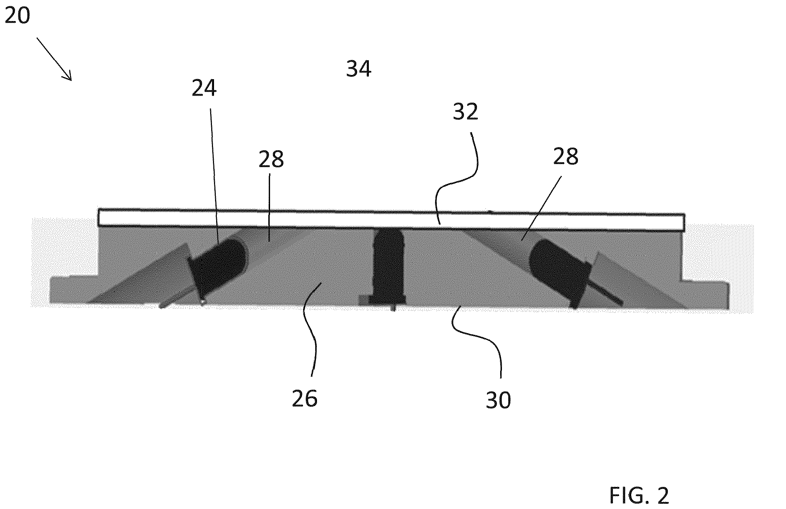

In its most basic form, as shown in FIGS. 1 and 2, the detection apparatus 20 includes a light source 22, such as a light emitting diode (LED) for example, and a light sensing device 24, such as a photodiode for example. However, embodiments including a plurality of light sources 22 and/or a plurality of light sensing devices 24 are also contemplated herein. As shown, the detection apparatus 20 further comprises a body or casing 26 having at least one cavity or channel 28 formed therein. According to the claimed subject-matter and as in FIG. 2, the one or more channels 28 extend generally from a first surface 30 of the body 26 to a second, opposite surface 32 of the body 26. The first surface 30 of the body 26 is typically positioned adjacent a supporting surface, such as a wall or ceiling for example, and the second surface 32 of the body 26 is typically arranged in communication with an area being monitored to determine the existence of a condition or event.

According to the invention, each of the one or more light sensing devices 24 is positioned within a corresponding channel 28 such that the portion of the at least one light sensing device 24 configured to receive a light signal is facing the second surface 32 and the area being monitored 34 for a hazardous condition. The light source 22 is similarly positioned about the body 26 such that light is emitted from the light source 22 towards the area being monitored 34. The at least one light source 22 may, but need not be mounted within one of the plurality of channels 28.

Each light sensing device 24 of the detection apparatus 20 has a corresponding detection sensing volume associated therewith. The light source 22 is oriented within the device 20 such that at least a portion of the light emitted by the light source intersects the detection sensing volume of the light sensing device 24. Accordingly, the light sensing device 24 can be used to evaluate a change in the scattered light incident on the light sensing device 24 over time.

According to the claimed subject-matter, the at least one light source 22 is configured to emit a first light having a first wavelength and a second light having a second wavelength. In an embodiment, the at least one light source 22 includes a single light source, for example a light emitting diode (LED), configured to emit both the first light and second light. In such embodiments, the light source 22 may be configured to alternate emitting the first light and second light at known intervals. Accordingly, the first light and the second light are emitted at different times, and not simultaneously. However, embodiments where a first light source generates the first light having the first wavelength and a second light source, distinct from the first light source, generates the second light having the second wavelength are also contemplated herein.

In an embodiment, the first wavelength is within the visible spectrum, such as between 380-760 nm for example, and the second wavelength is longer than 760 nm. Accordingly, the second light associated with the second wavelength may be an infrared light. For example, the LED or light source 22 may be configured such that the first light is a visible blue light and the second light is an infrared light. Alternatively, the second wavelength may be shorter than 380 nm, such that the second light is associated with an ultraviolet light. However, embodiments where both the first light and the second light have a wavelength within the visible spectrum or outside of the visible spectrum are also contemplated herein.

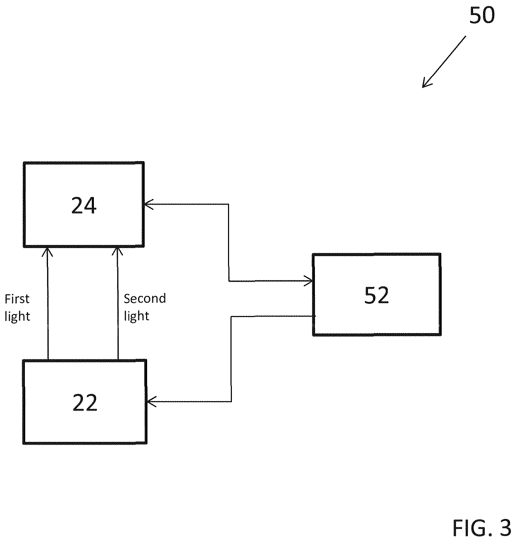

With reference now to FIG. 3, a control system 50 configured to operate the detection apparatus 20 is described in more detail. The control system 50 includes a processing device 52 operably coupled to both the at least one light source 22 and the at least one light sensing device 24. The processing device 52 may be configured to control operation of the at least one light source to emit the first light and second light. Alternatively, or in addition, the processing device 52 is configured to receive a signal of scattered light from the at least one light sensing device 24.

In addition, the processing device 52 may include a memory (not shown) capable of storing executable instructions. The executable instructions may be stored or organized in any manner and at any level of abstraction, such as in connection with one or more applications, processor, or routines, to analyze the signals detected by the plurality of sensors to make alarm decisions after preset threshold levels are reached according to the method described herein.

With respect to operation of the detection apparatus 20, a plurality of different particle types may be present in the area being monitored 34. Examples of such particles include, but are not limited to smoke, gas, steam, and dust. Each of these different types of particles has different properties. As a result, the detection apparatus 20 is configured to distinguish between the different types of particles based on the different properties of the particles. In an embodiment, the detection apparatus 20 is configured to identify the presence of different particles based on the scattering that occurs. More specifically, the scattering that occurs in response to each of the different types of particles within the area 34 will vary based on the wavelength of the light to which the particle is exposed. Accordingly, by measuring the scattering that occurs in response to emission of both the first light having the first wavelength and the second light having the second wavelength, it is possible to determine what type of particles are present in the area being monitored 34. The detection apparatus 20 is therefore capable of distinguishing between hazardous particles (i.e. smoke or gas) and nuisance particles (i.e. dust or steam).

In an embodiment, the processing device 52 of the control system 50 is operable to run an algorithm including a method 100 of identifying the particles within the area being monitored 34 and evaluating the presence of a hazardous condition by the detection apparatus 20. In block 102, the method 100 includes operating the light source 22 to emit the first light having a first wavelength into the area being monitored 34. The light sensing device 24 detects and measures the scattered light at the detection sensing volume resulting from emission of the first light by the light source 22, as shown in block 104. The light source 22 is then operated again, shown in block 106, thereby emitting a second light having a second wavelength into the area being monitored 34. In block 108, the light sensing device 24 detects and measures the scattered light at the detection sensing volume resulting from emission of the second light by the light source 22.

The light source 22 may be operable to emit one or both of the first light and the second light as a burst, or alternatively, as a pattern of emissions. Each light sensing device 24 detects and measures the scattered light resulting from operation of the light source 22 for a corresponding detection sensing volume. Accordingly, the scattered light resulting from the emission of the first light and the refracted light resulting from the emission of the second light is received by the same light sensing device 24.

Signals indicating the scattered light measured within the detection sensing volume for both the first emission and the second emission are communicated from the light sensing device 24 to the processing device 52, where the processing device 52 identifies the types of particles present within the area 34, shown in block 110. In an embodiment, the processing device 52 identifies the types of particles present by comparing the scattering measurements recorded based on the first and second wavelengths to known values, such as stored within a table for example. In an embodiment, identifying the types of particles present within the area 34 includes determining whether the identified particles are indicative of a nuisance or of a hazardous condition. In an embodiment, detection of hazardous particles indicates the presence of a fire. Upon detection of one or more particles associated with a hazardous condition, the processing device 52 may generate a warning signal or message to indicate the presence of a hazardous condition, as shown in block 112.

If the processing device 52 has detected the presence of nuisance particles, the detection is discarded and the method is repeated. The control system 50 may operate periodically to take an updated measurement of the scattered light that results from operation of the light source 22. Operation of the light source 22 to record an updated measurement of the scattered light and evaluate the particles present within the area 34 may occur at predetermined intervals, or alternatively, in response to the occurrence of an abnormality during the normal monitoring performed by the detection apparatus 20.

While the disclosure has been described in detail in connection with only a limited number of embodiments, it should be readily understood that the disclosure is not limited to such disclosed embodiments. Additionally, while various embodiments of the disclosure have been described, it is to be understood that aspects of the disclosure may include only some of the described embodiments. Accordingly, the disclosure is not to be seen as limited by the foregoing description, but is only limited by the scope of the appended claims.

## Claims

1. A detection apparatus (20) for monitoring a condition of an area, the detection apparatus comprising:
- a control system:
- at least one light source (22) operable to selectively emit a first light having a first wavelength and a second light source operable to emit a second light having a second wavelength, wherein the first wavelength and the second wavelength are different; and
- at least one light sensing device (24) operable to measure a scattered portion of the first light and measure a scattered portion of the second light to determine a type of particle present within the area;
the detection apparatus (20) being a chamber-less smoke detector; and
the system comprising a processing device operably coupled to the at least one light source and the at least one light sensing device, the processing device being operable to identify a type of particle present in response to:
- a signal indicating the scattered light measured in response to emission of the first light; and
- another signal indicating the scattered light measured in response to emission of the second light
by comparing the scattering measurements recorded based on the first and second wavelengths to known values stored within a table,
**characterized in that**
the control system is configured to emit the first light and the second light at different times, and not simultaneously;
wherein the detection apparatus (20) comprises a body (26) having at least one channel (28) formed therein, the at least one channel (28) extending from a first surface (30) of the body (26) to a second, opposite surface (32) of the body (26), the first surface (30) of the body (26) being destined to be positioned adjacent a supporting surface, and the second surface (32) of the body (26) being destined to be arranged in communication with the area being monitored,
wherein the at least one light sensing device (24) is positioned within a corresponding channel (28) such that the portion of the at least one light sensing device (24) configured to receive a light signal is facing the second surface (32) and the area being monitored (34) for a hazardous condition,
wherein the at least one light source (22) is similarly positioned about the body (26) such that light is emitted from the light source (22) towards the area being monitored (34), the at least one light source (22) being mounted within another of the plurality of channels (28),
wherein each light sensing device (24) of the detection apparatus (20) has a corresponding detection sensing volume associated therewith,
wherein the light source (22) is oriented within the detection apparatus (20) such that at least a portion of the light emitted by the light source (22) intersects the detection sensing volume of the light sensing device (24).

2. The apparatus of claim 1, wherein at least one of the first wavelength and the second wavelength is within a visible spectrum.

3. The apparatus of any of the preceding claims, wherein at least one of the first wavelength and the second wavelength is associated with infrared radiation.

4. The apparatus of any of claims 1-2, wherein at least one of the first wavelength and the second wavelength is associated with ultraviolet radiation.

5. The apparatus of any of the preceding claims, wherein the light source (22) is a light emitting diode.

6. The apparatus of any of the preceding claims, wherein the light sensing device (24) is a photodiode.

7. The apparatus of any of the preceding claims, further comprising a processing device (52) operably coupled to the at least one light source (22) and the at least one light sensing device (24), wherein the processing device (52) is configured to control emission of the first light and the second light.

8. The apparatus of claim 7, wherein the processing device (52) is configured to compare the scattered portion of the first light and the scattered portion of the second light to known values to determine the type of particle present within the area.

9. The apparatus of claim 7, wherein the processing device (52) is configured to determine whether the type of particle present within the area is one of a nuisance particle and a hazardous particle.

10. A method of monitoring a condition of an area comprising, the method using a detection apparatus (20) according to any of claims 1 to 9:
Emitting with a first light source a first light having a first wavelength toward the area;
measuring a scattered portion of the first light;
emitting with a second light source a second light having a second wavelength toward the area, wherein the first wavelength and the second wavelength are different;
measuring a scattered portion of the second light;
wherein emitting the first light and emitting the second light occur at different times; and
determining a type of particle present in the area in response to the measured scattered portion of the first light and the measured scattered portion of the second light by comparing the scattering measurements recorded based on the first and second wavelengths to known values stored within a table.

11. The method of claim 10, wherein measuring the scattered portion of the first light is performed by a light sensing device and measuring the scattered portion of the second light is performed by the same light sensing device.

12. The method of claim 10 or claim 11, wherein emitting the first light is performed by a light source and emitting the second light is performed by the same light source.

13. The method of any of the preceding claims, wherein at least one of the first wavelength and the second wavelength is within a visible spectrum.

14. The method of any of the preceding claims, further comprising determining if the type of particle present in the area is one of a nuisance particle and a hazardous particle.

15. The method of claim 14, further comprising generating an alarm in response to determining that the type of particle present in the area is a hazardous particle.

## Patentansprüche

1. Eine Detektionsvorrichtung (20) zur Überwachung eines Zustands eines Bereichs, wobei die Detektionsvorrichtung umfasst:
- ein Steuersystem:
- mindestens eine Lichtquelle (22), die so betreibbar ist, dass sie selektiv ein erstes Licht mit einer ersten Wellenlänge emittiert, und eine zweite Lichtquelle, die so betreibbar ist, dass sie ein zweites Licht mit einer zweiten Wellenlänge emittiert, wobei die erste Wellenlänge und die zweite Wellenlänge unterschiedlich sind; und
- mindestens eine Lichtsensorvorrichtung (24), die so betreibbar ist, dass sie einen gestreuten Anteil des ersten Lichts und einen gestreuten Anteil des zweiten Lichts misst, um eine Art von Partikeln zu bestimmen, die in dem Bereich vorhanden sind;
wobei die Detektionsvorrichtung (20) ein kammerloser Rauchmelder ist; und
wobei das System eine Verarbeitungsvorrichtung umfasst, die funktional mit der mindestens einen Lichtquelle und der mindestens einen Lichtsensorvorrichtung gekoppelt ist, wobei die Verarbeitungsvorrichtung dazu ausgelegt ist, eine Art von vorhandenen Partikeln zu identifizieren als Reaktion auf:
- ein Signal, das das gestreute Licht anzeigt, das als Reaktion auf die Emission des ersten Lichts gemessen wurde; und
- ein weiteres Signal, das das gestreute Licht anzeigt, das als Reaktion auf die Emission des zweiten Lichts gemessen wurde,
durch Vergleichen der auf der Grundlage der ersten und zweiten Wellenlänge aufgezeichneten Streumessungen mit bekannten Werten, die in einer Tabelle gespeichert sind,
**dadurch gekennzeichnet, dass**
das Steuersystem so konfiguriert ist, dass es das erste Licht und das zweite Licht zu unterschiedlichen Zeitpunkten und nicht gleichzeitig aussendet;
wobei die Detektionsvorrichtung (20) einen Körper (26) umfasst, in dem mindestens ein Kanal (28) ausgebildet ist, wobei sich der mindestens eine Kanal (28) von einer ersten Oberfläche (30) des Körpers (26) zu einer zweiten, gegenüberliegenden Oberfläche (32) des Körpers (26) erstreckt, wobei die erste Oberfläche (30) des Körpers (26) dazu bestimmt ist, an einer Auflagefläche angeordnet zu werden, und die zweite Oberfläche (32) des Körpers (26) dazu bestimmt ist, in Verbindung mit dem zu überwachenden Bereich angeordnet zu werden,
wobei die mindestens eine Lichtsensorvorrichtung (24) innerhalb eines entsprechenden Kanals (28) so positioniert ist, dass der Abschnitt der mindestens einen Lichtsensorvorrichtung (24), der zum Empfangen eines Lichtsignals ausgelegt ist, der zweiten Oberfläche (32) und dem auf einen gefährlichen Zustand zu überwachenden Bereich (34) zugewandt ist,
wobei die mindestens eine Lichtquelle (22) in ähnlicher Weise um den Körper (26) herum so angeordnet ist, dass Licht von der Lichtquelle (22) in Richtung des zu überwachenden Bereichs (34) emittiert wird, wobei die mindestens eine Lichtquelle (22) in einem weiteren der mehreren Kanäle (28) angebracht ist,
wobei jede Lichtsensorvorrichtung (24) der Detektionsvorrichtung (20) ein entsprechendes Detektionssensorvolumen aufweist, das ihr zugeordnet ist,
wobei die Lichtquelle (22) innerhalb der Detektionsvorrichtung (20) so ausgerichtet ist, dass zumindest ein Teil des von der Lichtquelle (22) emittierten Lichts das Detektionssensorvolumen der Lichtsensorvorrichtung (24) schneidet.

2. Vorrichtung nach Anspruch 1, wobei mindestens eine der ersten Wellenlänge und der zweiten Wellenlänge im sichtbaren Spektrum liegt.

3. Vorrichtung nach einem der vorstehenden Ansprüche, wobei mindestens eine der ersten Wellenlänge und der zweiten Wellenlänge Infrarotstrahlung zugeordnet ist.

4. Vorrichtung nach einem der Ansprüche 1 bis 2, wobei mindestens eine der ersten Wellenlänge und der zweiten Wellenlänge ultravioletter Strahlung zugeordnet ist.

5. Vorrichtung nach einem der vorstehenden Ansprüche, wobei die Lichtquelle (22) eine Leuchtdiode ist.

6. Vorrichtung nach einem der vorstehenden Ansprüche, wobei die Lichtsensorvorrichtung (24) eine Fotodiode ist.

7. Vorrichtung nach einem der vorstehenden Ansprüche, die ferner eine Verarbeitungsvorrichtung (52) umfasst, die funktionsfähig mit der mindestens einen Lichtquelle (22) und der mindestens einen Lichtsensorvorrichtung (24) gekoppelt ist, wobei die Verarbeitungsvorrichtung (52) konfiguriert ist die Emission des ersten Lichts und des zweiten Lichts zu steuern.

8. Vorrichtung nach Anspruch 7, wobei die Verarbeitungsvorrichtung (52) konfiguriert ist den gestreuten Anteil des ersten Lichts und den gestreuten Anteil des zweiten Lichts mit bekannten Werten zu vergleichen, um die Art der in dem Bereich vorhandenen Partikel zu bestimmen.

9. Vorrichtung nach Anspruch 7, wobei die Verarbeitungsvorrichtung (52) konfiguriert ist zu bestimmen, ob die Art der in dem Bereich vorhandenen Partikel ein Störpartikel oder ein gefährliches Partikel ist.

10. Verfahren zum Überwachen eines Zustands eines Bereichs, wobei das Verfahren eine Detektionsvorrichtung (20) gemäß einem der Ansprüche 1 bis 9 verwendet:
Aussenden eines ersten Lichts mit einer ersten Wellenlänge in Richtung des Bereichs mittels einer ersten Lichtquelle;
Messen eines gestreuten Anteils des ersten Lichts;
Aussenden eines zweiten Lichts mit einer zweiten Wellenlänge in Richtung des Bereichs mittels einer zweiten Lichtquelle, wobei die erste Wellenlänge und die zweite Wellenlänge unterschiedlich sind;
Messen eines gestreuten Anteils des zweiten Lichts;
wobei das Aussenden des ersten Lichts und das Aussenden des zweiten Lichts zu unterschiedlichen Zeitpunkten erfolgen; und
Bestimmen einer Art von Partikeln, die in dem Bereich vorhanden sind, als Reaktion auf den gemessenen gestreuten Anteil des ersten Lichts und den gemessenen gestreuten Anteil des zweiten Lichts durch Vergleichen der auf der Grundlage der ersten und zweiten Wellenlänge aufgezeichneten Streumessungen mit bekannten Werten, die in einer Tabelle gespeichert sind.

11. Verfahren nach Anspruch 10, wobei das Messen des gestreuten Anteils des ersten Lichts durch eine Lichtsensorvorrichtung erfolgt und das Messen des gestreuten Anteils des zweiten Lichts durch dieselbe Lichtsensorvorrichtung erfolgt.

12. Verfahren nach Anspruch 10 oder Anspruch 11, wobei das Aussenden des ersten Lichts durch eine Lichtquelle und das Aussenden des zweiten Lichts durch dieselbe Lichtquelle erfolgt.

13. Verfahren nach einem der vorstehenden Ansprüche, wobei mindestens eine der ersten Wellenlänge und der zweiten Wellenlänge im sichtbaren Spektrum liegt.

14. Verfahren nach einem der vorstehenden Ansprüche, das ferner umfassend Bestimmen, ob es sich bei der in dem Bereich vorhandenen Partikelart um eine störende Partikelart oder eine gefährliche Partikelart handelt.

15. Verfahren nach Anspruch 14, das ferner das Auslösen eines Alarms umfasst, wenn festgestellt wird, dass es sich bei der in dem Bereich vorhandenen Partikelart um ein gefährliches Partikel handelt

## Revendications

1. Appareil de détection (20) pour surveiller une situation d'une zone, l'appareil de détection comprenant :
- un système de commande :
- au moins une source de lumière (22) permettant d'émettre sélectivement une première lumière ayant une première longueur d'onde et une deuxième source de lumière permettant d'émettre une deuxième lumière ayant une deuxième longueur d'onde, dans lequel la première longueur d'onde et la deuxième longueur d'onde sont différentes ; et
- au moins un dispositif de détection de lumière (24) permettant de mesurer une partie diffusée de la première lumière et de mesurer une partie diffusée de la deuxième lumière pour déterminer un type de particule présente dans la zone ;
l'appareil de détection (20) étant un détecteur de fumée sans chambre ; et
le système comprenant un dispositif de traitement couplé de manière opérationnelle à l'au moins une source de lumière et à l'au moins un dispositif de détection de lumière, le dispositif de traitement permettant d'identifier un type de particule présente en réponse à :
- un signal indiquant la lumière diffusée mesurée en réponse à l'émission de la première lumière ; et
- un autre signal indiquant la lumière diffusée mesurée en réponse à l'émission de la deuxième lumière
en comparant les mesures de diffusion enregistrées sur la base des première et deuxième longueurs d'onde à des valeurs connues stockées dans un tableau,
**caractérisé en ce que**
le système de commande est configuré pour émettre la première lumière et la deuxième lumière à des moments différents, et non simultanément ;
dans lequel l'appareil de détection (20) comprend un corps (26) dans lequel est formé au moins un canal (28), l'au moins un canal (28) s'étendant d'une première surface (30) du corps (26) à une deuxième surface (32) opposée du corps (26), la première surface (30) du corps (26) étant destinée à être positionnée de manière adjacente à une surface de support, et la deuxième surface (32) du corps (26) étant destinée à être agencée en communication avec la zone surveillée,
dans lequel l'au moins un dispositif de détection de lumière (24) est positionné à l'intérieur d'un canal (28) correspondant de sorte que la partie de l'au moins un dispositif de détection de lumière (24) configuré pour recevoir un signal lumineux se trouve face à la deuxième surface (32) et à la zone surveillée (34) en prévention d'une situation dangereuse,
dans lequel l'au moins une source de lumière (22) est positionnée de manière similaire autour du corps (26) de sorte que de la lumière soit émise depuis la source de lumière (22) vers la zone surveillée (34), l'au moins une source de lumière (22) étant montée à l'intérieur d'un autre canal de la pluralité de canaux (28),
dans lequel chaque dispositif de détection de lumière (24) de l'appareil de détection (20) est associé à un volume de détection correspondant,
dans lequel la source de lumière (22) est orientée à l'intérieur de l'appareil de détection (20) de sorte qu'au moins une partie de la lumière émise par la source de lumière (22) croise le volume de détection du dispositif de détection de lumière (24).

2. Appareil selon la revendication 1, dans lequel au moins une parmi la première longueur d'onde et la deuxième longueur d'onde se situe dans un spectre visible.

3. Appareil selon l'une des revendications précédentes, dans lequel au moins une parmi la première longueur d'onde et la deuxième longueur d'onde est associée à un rayonnement infrarouge.

4. Appareil selon l'une des revendications 1 et 2, dans lequel au moins une parmi la première longueur d'onde et la deuxième longueur d'onde est associée à un rayonnement ultraviolet.

5. Appareil selon l'une des revendications précédentes, dans lequel la source de lumière (22) est une diode électroluminescente.

6. Appareil selon l'une des revendications précédentes, dans lequel le dispositif de détection de lumière (24) est une photodiode.

7. Appareil selon l'une des revendications précédentes, comprenant en outre un dispositif de traitement (52) couplé de manière opérationnelle à l'au moins une source de lumière (22) et à l'au moins un dispositif de détection de lumière (24), dans lequel le dispositif de traitement (52) est configuré pour commander l'émission de la première lumière et de la deuxième lumière.

8. Appareil selon la revendication 7, dans lequel le dispositif de traitement (52) est configuré pour comparer la partie diffusée de la première lumière et la partie diffusée de la deuxième lumière à des valeurs connues pour déterminer le type de particule présente dans la zone.

9. Appareil selon la revendication 7, dans lequel le dispositif de traitement (52) est configuré pour déterminer si le type de particule présente dans la zone est un parmi celui d'une particule nuisible et celui d'une particule dangereuse.

10. Méthode de surveillance d'une situation d'une zone, utilisant un appareil de détection (20) selon l'une des revendications 1 à 9, la méthode comprenant :
à l'aide d'une première source de lumière, l'émission d'une première lumière ayant une première longueur d'onde vers la zone ;
la mesure d'une partie diffusée de la première lumière ;
à l'aide d'une deuxième source de lumière, l'émission d'une deuxième lumière ayant une deuxième longueur d'onde vers la zone, dans laquelle la première longueur d'onde et la deuxième longueur d'onde sont différentes ;
la mesure d'une partie diffusée de la deuxième lumière ;
dans laquelle l'émission de la première lumière et l'émission de la deuxième lumière ont lieu à des moments différents ; et
la détermination d'un type de particule présente dans la zone en réponse à la partie diffusée mesurée de la première lumière et à la partie diffusée mesurée de la deuxième lumière en comparant les mesures de diffusion enregistrées sur la base des première et deuxième longueurs d'onde à des valeurs connues stockées dans un tableau.

11. Méthode selon la revendication 10, dans laquelle la mesure de la partie diffusée de la première lumière est effectuée par un dispositif de détection de lumière, et la mesure de la partie diffusée de la deuxième lumière est effectuée par le même dispositif de détection de lumière.

12. Méthode selon la revendication 10 ou la revendication 11, dans laquelle l'émission de la première lumière est effectuée par une source de lumière, et l'émission de la deuxième lumière est effectuée par la même source de lumière.

13. Méthode selon l'une des revendications précédentes, dans laquelle au moins une parmi la première longueur d'onde et la deuxième longueur d'onde se situe dans un spectre visible.

14. Méthode selon l'une des revendications précédentes, comprenant en outre le fait de déterminer si le type de particule présente dans la zone est un parmi celui d'une particule nuisible et celui d'une particule dangereuse.

15. Méthode selon la revendication 14, comprenant en outre la génération d'une alarme lorsqu'il est déterminé que le type de particule présente dans la zone est celui d'une particule dangereuse.
